# EUROPEAN PATENT APPLICATION

(11) **EP 0 538 717 A1**
(43) Date of publication of application: **28.04.1993**
(21) Application number: 92117497.5
(22) Date of filing: 14.10.1992
(51) Int. Cl.: C22B 7/02, C21B 13/08, C22B 13/02, C22B 19/28, C22B 19/30

(54) **Method for the pyrometallurgical treatment of iron oxides and heavy metals contained in the fumes of electric arc furnaces**

(30) Priority: 21.10.1991 IT UD910173
(71) Applicant: BELTRAME DANIELI AMBIENTE SpA, I-45011 Adria (RO) (IT)
(72) Inventor: Losciale, Matteo, I-33100 Udine (IT); Farnia, Renato, I-30125 Venezia (IT); Zubini, Fulvio, I-34133 Trieste (IT); Faggionato, Antonio, I-36077 Altavilla Vicentina (VI) (IT)
(74) Representative: Petraz, Gilberto Luigi

(57) **Abstract**

Method for the pyrometallurgical treatment of iron oxides and/or zinc oxides and/or heavy metals, such as those contained in the fumes of electric arc furnaces, whereby the oxides and possibly the heavy metals are fed into a rotary furnace (21) so as to obtain oxides of heavy metals and/or cast-iron, the oxides being collected (34) and sent to a distillation furnace (67), whence the heavy metals are obtained in the liquid state.

## Description

This invention concerns a method for the pyrometallurgical treatment of iron oxides and heavy metals contained in the fumes of electric arc furnaces, as set forth in the main claim.

To be more exact, the method concerns the direct reduction of iron oxides, from which are derived products (sponge iron) suitable for employment as solid charging materials in smelting furnaces producing steel.

Moreover, the method according to this invention enables avy metals, mainly zinc and lead, to be recovered which are contained in the form of powders in the fumes generated in an electric arc furnace.

Furthermore, the method according to the invention can be used to treat any type of metallic powders or materials containing significant quantities of zinc oxide, such as residues of galvanisers or motor car tyre producers.

The direct reduction of iron oxide in the form of pellets or mineral agglomerate is a process belonging to the state of the art and is carried out in rotary furnaces, air current type furnaces, fluidized bed furnaces or retorts.

The purpose of this known method is to convert the iron oxides into a product commonly known as direct reduction iron, which can be smelted readily in an electric arc furnace. The reducing agent used in these furnaces is coal or coke.

The fumes generated in electric arc furnaces contain powders with a high iron content and heavy metals such as zinc, cadmium and lead.

In general, between about 1.5 kgs. and 15 kgs. of powders are produced for each tonne of steel produced. These powders, owing to the high degree of pollution caused (they are classified as toxic-harmful substances) or owing to their innate value, are recovered in sleeve filters and treated with hydro-metallurgical or pyrometallurgical processes.

The reduction processes of the state of the art do not arrange for the disposal of the powders generated in electric arc furnaces nor for the recovery of the zinc, cadmium and lead.

Besides, the known reduction processes entail high plant costs and require a high working cost.

The present applicants have studied and tested this invention so as to obviate the drawbacks of the state of the art and to achieve further advantages.

This invention is set forth and characterized in the main claim, while the dependent claims describe variants of the idea of the main solution.

This invention consists in providing a pyrometallurgical (direct reduction) method which can be applied to iron oxides and heavy metals contained in powders obtained from the fumes of electric arc furnaces in steelworks.

The main purpose of this invention is to achieve a method which provides for disposal of the powders generated in electric arc furnaces and entails limited costs of plant and low working costs.

The method of this invention includes a step of preparation of the charge in raw pellets, the reduction of the pellets in a rotary furnace, the smelting of the reduced pellets and the casting and moulding of cast-iron ingots.

Moreover, the fumes are picked up in a sleeve-type filter so as to recover the oxides of zinc, lead and cadmium in the form of powders.

Thereafter, the oxides of zinc, lead and cadmium are pelletized and undergo heat treatment in a calcination furnace so as to remove any impurities consisting of chlorine and fluorine.

A part of the lead and cadmium is lost in this step, for the lead and cadmium vaporize in the form of chlorides and fluorides, which are collected in a filter.

In fact, during the calcination process the chlorine and fluorine are bonded to the cadmium, lead and zinc with the formation of chlorides, which vaporize at lower temperatures than the corresponding oxides.

After the heat treatment the oxides of zinc, lead and cadmium are collected, prepared and delivered into a distillation furnace for conversion of the oxides of zinc and cadmium into zinc and cadmium vapour and for conversion of the lead oxide into liquid lead.

The zinc vapour is then conveyed into a condenser, where it is converted into liquid zinc which is cast in moulds.

The vapours of cadmium and of a part of the lead reach the condenser together with the zinc vapour.

The greater part of the lead remains on the bottom of the distillation furnace in a liquid form, which is tapped.

According to the method of this invention the concentrated powders alone containing zinc, lead and cadmium oxides are processes in the distillation furnace.

The method according to this invention is independent and offers the feature of being divided into several independent parts so as to provide great flexibility and a noteworthy control of the charges.

Moreover, the method according to the invention is employed to process any types of metallic powders or materials containing significant quantities of zinc oxide.

We shall describe hereinafter the basic steps of the method according to the invention, which includes a preliminary step and three successive processing cycles, which lead to the obtaining of metallic zinc.

The preliminary step consists in preparing the charge and provides for the obtaining of raw agglomerates, which have to possess the characteristics of a homogeneous nature and high porosity so as to assist the chemical reactions.

In the first production cycle of the method according to the invention the raw agglomerates undergo heat treatment in a rotary furnace at a temperature of 900°-1300°C. This heat treatment produces pre-reduced sponge iron and recovers powders with a high content of heavy metals such as zinc, cadmium and lead in the state of oxides.

The sponge iron thus produced is sent to an electric arc smelting furnace, from which are obtained cast-iron and inert vitreous slag.

According to a variant the sponge iron leaving the above rotary furnace can be merely cooled and used as an additional charge in steelworks.

The oxides of zinc, cadmium and lead in the powders are recovered in a dry filter after having been cooled in a heat exchanger.

In the second production cycle of the method according to the invention the recovered oxides of zinc, cadmium and lead undergo a calcination heat treatment to remove any impurities consisting of chlorine and fluorine.

This calcination heat treatment becomes necessary only when the powders contain quantities of chlorine and fluorine such as to impair recovery of the zinc in the successive step.

If, instead, these pollutant elements, chlorine and fluorine, are absent, this step can be omitted and it is possible to pass directly to the successive cycle.

The third cycle of the method according to the invention consists of the direct reduction of the zinc, cadmium and lead oxides with coke as a reducing agent in a distillation furnace.

The zinc distills at a temperature of about 1000°C and leaves the furnace in the form of vapour together with the cadmium and a small part of the lead, whereas the greater part of the lead remains in the liquid phase.

The zinc vapour arrives at a condensor, where it is cooled at once, so that it condenses in the liquid phase. The liquid zinc is tapped continuously and cast in moulds.

The slag tapped from the distillation furnace during this step is cooled and recycled in the rotary furnace in the first production cycle, whereas the lead is cast in a mould.

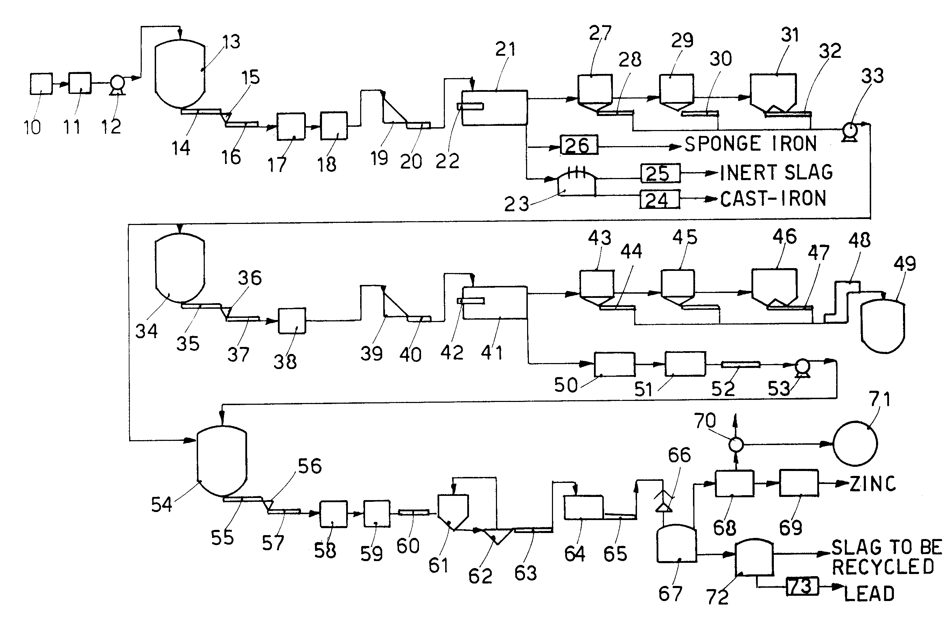

The attached figure, which is given as a non-restrictive example, shows a block diagram of a method according to the invention with the relative essential component elements.

We shall describe first the preliminary step of preparing the charge.

The input materials consist of powders from an electric arc furnace, solid residues based on zinc oxide, scale, coal, coke, basic additives, acid additives, binder and recycled material, these materials arriving in various piece sizes and particle sizes. It is for this reason that they have to be prepared so as to be able to form the mixtures of powders required for the subsequent processes.

The materials having a large piece size on arrival are fed firstly into a crusher 10 and then into a mill 11 to be reduced to powder.

Next, a pneumatic conveyor 12 gathers the material thus treated into storage silos 13, whereas the materials arriving already powdered are charged directly into the storage silos 13 by the pneumatic conveyor 12.

The storage silos 13 cooperate with withdrawal worms 14 or other suitable means, which convey the above materials to weighing means 15. First conveyor belts 16 convey the materials into a drier 17, so that the materials are already metered and dehumidified when they reach a mixer 18 which makes the charge homogeneous.

The mixture leaving the mixer 18 arrives at a pelletization machine 19, which performs the task of rolling the material to provide the best shape and sizes for feeding a rotary furnace 21.

In the first cycle of the method according to the invention a second conveyor belt 20 or another suitable means conveys the above prepared charge from the pelletization machine 19 to the furnace 21. This is a rotary-drum furnace lined inside with refractory material and is inclined by 2°-4° so as to assist feed of the charge; the furnace 21 is equipped with a burner 22 operating with methane and/or fuel oil or any other fuel suitable to supply the heat required for reduction of the metals contained in the feeding charge.

The burner 22 has to supply the thermal power required for the furnace 21 to reach a working temperature between 900°C and 1300°C.

The sponge iron leaving the rotary furnace 21 is conveyed, while still hot, into an electric arc furnace 23, whence the raw cast-iron is poured into an ingot mould 24, whereas the inert slag is sent into a slag granulating pit 25.

Otherwise, the sponge iron leaving the rotary furnace 21 may be merely cooled on a cooling belt 26 and used as an additional charge in electric arc furnaces of steelworks.

The fumes leaving the rotary-drum furnace 21 and containing oxides of zinc, lead and cadmium leave on the pellet-charging side and enter a powders chamber 27 equipped with collection hoppers and withdrawal worms 28.

Suitable sprayers are located in the powders chamber 27 to cool the fumes therein 27 and inject atomized water.

The fumes pass next into a heat exchanger 29 working by normal convection of air and equipped with collection hoppers and withdrawal worms 30. The fumes thus cooled are caught in a sleeve filter 31.

The cleaning of the sleeves of the filter 31 is carried out with air blown in the opposite direction to the flow of the fumes entering the filter 31. The powders are deposited in hoppers with which the sleeve filter is equipped.

Collection worms 32 positioned beneath the sleeve filter 31 recover the oxides of zinc, lead and cadmium and deliver the same to collection silos 34 by means of a pneumatic conveyor system 33 for instance.

The second cycle becomes necessary only if the oxides of zinc, lead and cadmium are polluted with chlorine and fluorine in quantities such as to impair the subsequent processing steps.

Otherwise, when the oxides of zinc, lead and cadmium do not contain chlorine or fluorine, this second cycle is omitted and the oxides pass directly to the successive processing cycle.

The oxides of zinc, lead and cadmium are withdrawn continuously from the collection silos 34 by withdrawal worms 35 and are sent to weighing means 36; thereafter they arrive on a third conveyor belt 37 at a drier 38, which in turn feeds a pelletization machine 39, which forms the oxides of zinc, lead and cadmium into the best shape and size to feed, by means of a fourth conveyor belt 40, a calcination furnace 41.

In this case the calcination furnace 41 is of a rotary drum type, lined with refractory materials and inclined by 2°-4° and is equipped with a burner 42 operated by methane and/or fuel oil.

Solid material consisting of additionally concentrated zinc oxide free of chlorine and fluorine leaves the discharge outlet of the calcination furnace 41.

The fumes containing chlorides and fluorides of lead, cadmium and, to a small extent, zinc leave the calcination furnace 41 on the material-charging side. These fumes are passed through a powders chamber 43 equipped with collection hoppers and withdrawal worms 44, pass next through a heat exchanger 45 working by natural convection and arrive finally at a sleeve filter 46 equipped with hoppers and withdrawal worms 47, in which the chlorides of lead, cadmium and zinc are recovered in the form of powders.

A bucket elevator 48 conveys the chlorides to appropriate storage silos 49.

The zinc oxides leaving in the solid state are cooled on a fifth conveyor belt 50 and conveyed to a granulation machine 51.

A sixth conveyor belt 52 then conveys the zinc oxides to a pneumatic conveyor system 53, which delivers them to appropriate storage silos 54.

In the third production cycle of the method according to the invention the charge to be processed consists of the concentrated zinc oxides and possibly of lead and cadmium oxides, coke, acid additives and binder material.

The storage silos 54 cooperate with withdrawal worms 55 or other suitable means, which convey the above materials to weighing means 56, so that the materials are metered and forwarded on a seventh conveyor belt 57 to a drier 58 and thence to a mixer 59.

This mixer 59, which performs the task of keeping the charge homogeneous, cooperates with a conveyor worm 60, which conveys the above mixture to a briquetting machine 61 equipped with a riddle 62 to recycle any fine powders which may form.

The briquetting machine 61 performs the function of forming the mixture in the best shape and sizes to feed a zinc distillation furnace 67.

The briquettes thus produced are fed on an eighth conveyor belt 63 into a pre-heating furnace 64, wherein they undergo a baking treatment at a temperature which should not exceed 800°C.

A ninth conveyor belt 65 then conveys the hot briquettes into a double-closure charging system 66, which feeds the zinc distillation furnace 67.

Direct reduction of the zinc oxide with the formation of two phases, one liquid and the other a vapour, takes place in the distillation furnace 67, which in this case operates with a current of air.

In this air-current distillation furnace 67 the heat required for reduction of zinc oxide is provided by combustion of the excess coke charged into the distillation furnace 67 with air enriched with oxygen.

In this way an ascending current of carbon monoxide is formed and assists reduction of the oxides of zinc, cadmium and lead which may be present.

The air is pre-heated and introduced into the distillation furnace 67 under pressure; the melting of the material (1200°C-1500°C) takes place in the furnace 67, and the material in the liquid phase is then cast.

The zinc in the state of a vapour leaves the distillation furnace 67 at a temperature between 900°C and 1100°C.

According to a variant the distillation furnace 67 is of a submerged arc type and the heat of reaction is provided by a direct current electrode. The submerged-arc distillation furnace 67 works at an overpressure so as to prevent entries of air damaging for the process and dangerous and to assist the process of condensation of the zinc in a successive step.

The briquettes are brought to their melting point and thus form a layer of slag which is continuously cast.

The zinc vaporizes and leaves the distillation furnace 67 at a temperature between 950°C and 1200°C.

The zinc vapour which forms in the distillation furnace 67 passes through an outlet and is brought to a condenser 68, which may be a zinc splash condenser, for instance.

According to a variant it is possible to employ a condenser 68 which obtains an intimate contact between the incoming gas consisting of zinc vapour and carbon monoxide and the liquid zinc contained in that gas.

As the condenser 68 works at an overpressure, it is necessary to provide a difference in height between the surface of the liquid in contact with the incoming gas and the surface of the liquid in contact with the outgoing gas, and this difference should take into account the difference in pressure which is realized within the condenser 68.

The zinc vapour, passing through the bath of liquid zinc kept at about 550°C, condenses.

The liquid zinc at a temperature of 540°C-560°C is continuously poured from a spillway and is cast in ingots in a mould 69.

The gases leaving the condenser 68 and consisting of carbon monoxide and possible particles of zinc are scrubbed in a wet scrubber 70 so as to remove the particles of zinc, so that they can be re-used as fuel in the rotary furnace 21 and/or in the calcination furnace 41.

The waters leaving the wet scrubber 70 are collected in a decantation vessel 71 and recycled, whereas the sludges are recovered and recycled in the rotary furnace 21.

The greater part of the lead remains in the liquid phase on the bottom of the distillation furnace 67.

The liquid slag leaving the distillation furnace 67 is tapped and sent to a reverberatory furnace 72, in which the lead is separated by gravity.

There now takes place the pouring of the lead, which is cast in a mould 73, and of the slag, which is cooled and sent for recycling in the primary storage silos 13.

## Claims

1. Method for the pyrometallurgical treatment of iron oxides and/or zinc oxides and/or heavy metals, such as those contained in the fumes of electric arc furnaces, whereby the oxides and possibly the heavy metals are fed into a rotary furnace (21) so as to obtain oxides of heavy metals and/or cast-iron, the oxides being collected (34) and sent to a distillation furnace (67), whence the heavy metals are obtained in the liquid state.

2. Method as claimed in Claim 1, whereby the oxides of zinc and/or heavy metals are passed through a calcination furnace (41) for recovery of the chlorides and fluorides before being sent to the distillation furnace (67).

3. Method as claimed in Claim 1 or 2, whereby the chlorides and fluorides leaving the calcination furnace (41) in the form of fumes are passed through a powders chamber (43), are cooled and sent into a sleeve filter (46).

4. Method as claimed in any claim hereinbefore, whereby the oxides of calcined heavy metals are stored in storage silos (54).

5. Method as claimed in any claim hereinbefore, whereby the oxides of the heavy metals are briquetted (61) and preheated before being sent into the distillation furnace (67).
